# FASCICULE DE BREVET EUROPEEN

(11) **EP 3 765 368 B1**
(45) Date de publication et mention de la délivrance du brevet: **17.08.2022**
(21) Numéro de dépôt: 19718421.1
(22) Date de dépôt: 15.03.2019
(51) Int. Cl.: B64G 1/00, B64G 1/26, B64G 1/40, B64G 1/64, F02K 9/88, F02K 9/94

(54) **SYSTEME DE MISE EN ORBITE DE TRAVAIL POUR UN SATELLITE**
SYSTEM ZUM EINBRINGEN EINES SATELLITEN IN EINE ARBEITENDE UMLAUFBAHN
SYSTEM FOR PLACING A SATELLITE IN WORKING ORBIT

(30) Priorité: 16.03.2018 FR 1852266
(43) Date de publication de la demande: 20.01.2021
(73) Titulaire: ArianeGroup SAS, 78130 Les Mureaux (FR)
(72) Inventeur: GERBE, Laurent, 33600 Pessac (FR); RUMEAU, Nicolas, 33160 Saint Medard En Jalles (FR); AYEL, Emile, 33200 Bordeaux (FR); LEVINGER, David, 33200 Bordeaux (FR)
(74) Mandataire: Cabinet Beau de Loménie
(86) Numéro de dépôt international: PCT/FR2019/050587
(87) Numéro de publication internationale: WO 2019/175515

(56) Documents cités:
- EP-A1- 0 772 441
- WO-A1-2016/168484
- FR-A1- 2 980 177
- US-A1- 2018 037 340
- US-B1- 7 254 936
- POWERS J W ET AL: "SOLID ROCKET MOTORS AIM FOR DEEP SPACE", AEROSPACE AMERICA, AMERICAN INSTITUTE OF AERONAUTICS & ASTRONAUTICS. NEW YORK, US, vol. 28, no. 7, 1 juillet 1990 (1990-07-01), pages 48-51,89, XP000202209, ISSN: 0740-722X

## Description

### Arrière-plan de l'invention

La présente invention se rapporte au domaine général des systèmes de mise en orbite de satellites artificiels.

Généralement, les satellites sont mis en orbite autour de la Terre par un lanceur étagé qui comprend des étages inférieurs, un étage supérieur et une coiffe qui est fixée à l'étage supérieur et dans laquelle est installé le satellite.

Les étages inférieurs, qui comprennent notamment les étages d'accélération (également appelés « boosters » selon la terminologie anglo-saxonne bien connue) et l'étage principal, sont utilisés dans la première partie du vol, les dix premières minutes, et servent à fournir l'essentiel de la poussée au lanceur afin de placer dans l'espace l'étage supérieur du lanceur sur lequel est installé le satellite à mettre en orbite.

L'étage supérieur du lanceur a pour rôle, une fois que ledit étage supérieur est séparé des étages inférieurs, de placer le satellite dans son orbite de transfert. Les étages supérieurs connus possèdent un système de propulsion liquide.

Une fois le satellite mis en orbite autour de la Terre selon son orbite de transfert, le satellite utilise son propre système de propulsion, le moteur d'apogée, afin de se placer dans son orbite finale, appelée orbite de travail. Le moteur d'apogée est généralement un système à propulsion liquide ou bien électrique, ce qui offre l'avantage d'être ré-allumable, facilitant ainsi le contrôle de la mise en orbite de travail du satellite.

Cette solution actuelle rencontre toutefois plusieurs inconvénients. En effet, le passage pour le satellite de son orbite de transfert à son orbite de travail peut prendre un temps relativement important durant lequel le satellite ne peut pas être utilisé par son opérateur. Par exemple, la durée pour placer un satellite de son orbite de transfert à une orbite géostationnaire peut prendre une dizaine de jours lorsque le satellite possède un moteur d'apogée à propulsion liquide, et un mois voir plus lorsque le satellite comprend un moteur d'apogée à propulsion électrique.

On connait également les moteurs d'apogée à propulsion solide, qui sont réalisés par une cartouche de propergol solide dont le profil est usiné suivant les paramètres du transfert entre l'orbite de transfert et l'orbite de travail du satellite. Cependant une telle solution est complexe et coûteuse, car d'une part l'usinage du propergol est une opération dangereuse, et d'autre part l'usinage à réaliser est unique pour chaque satellite.

Par ailleurs, les moteurs d'apogée actuels possèdent une masse et un encombrement importants, réduisant ainsi les équipements de travail que peuvent embarquer les satellites. La masse et l'encombrement du moteur d'apogée est encore plus problématique lorsque le lanceur embraque plusieurs satellites la masse et l'encombrement des moteurs d'apogée de chaque satellite se cumulant.

FR 2 980 177 concerne une baie propulsive destinée à être transportée dans un lanceur spatial, comportant un adaptateur pour une coopération avec au moins un système embarqué sur la baie, le système comportant une alimentation électrique, la baie comportant des moteurs de propulsion liquide, au moins un moteur électrique de propulsion spatiale et un système additionnel de propulsion solide.

### Objet et résumé de l'invention

La présente invention a donc pour but principal de pallier de tels inconvénients en proposant un système de mise en orbite de travail pour au moins un satellite permettant de réaliser le transfert d'orbite entre l'orbite de transfert et l'orbite de travail dudit au moins un satellite.

La présente invention a notamment pour but de remplacer le moteur d'apogée du satellite, ce qui permet de gagner de la masse et de la place pour équiper le satellite avec plus d'équipements de travail, et particulièrement pour un lancement embarquant plusieurs satellites.

Selon un premier aspect, l'invention propose un système de mise en orbite de travail pour au moins un satellite, caractérisé en ce que le système de mise en orbite de travail comprend :
- un premier dispositif de fixation configuré pour fixer un premier satellite au système de mise en orbite de travail ;
- un dispositif de propulsion principal à propulsion solide comprenant une pluralité de cartouches parallèles de propergol solide ;
- un dispositif de propulsion secondaire qui est ré-allumable ;
- au moins un capteur de position configuré pour mesurer la position dudit système ;
- une unité de contrôle reliée audit au moins un capteur de position et qui est configurée pour commander une mise à feu des cartouches du dispositif de propulsion principal pour déplacer ledit système depuis une orbite de transfert jusqu'à une orbite de travail du premier satellite, ladite unité de contrôle étant en outre configurée pour commander une ouverture du premier dispositif de fixation pour séparer ledit système du premier satellite, et ladite unité de contrôle étant configurée pour commander un allumage du dispositif de propulsion secondaire pour contrôler une orientation dudit système.

Le système peut également comprendre les caractéristiques suivantes, qui peuvent être prises seules ou en combinaison suivant les possibilités techniques :
- l'unité de contrôle est configurée pour commander un allumage séquentiel de la pluralité de cartouches du dispositif de propulsion principal ;
- le système comprend un deuxième dispositif de fixation configuré pour fixer un deuxième satellite audit système, l'unité de contrôle étant configurée pour commander une ouverture du deuxième dispositif de fixation pour séparer le deuxième satellite dudit système ;
- le deuxième dispositif de fixation est configuré pour fixer le deuxième satellite directement au premier satellite, l'unité de contrôle étant configurée pour commander une ouverture du deuxième dispositif de fixation pour séparer le deuxième satellite dudit premier satellite ;
- le deuxième dispositif de fixation est configuré pour fixer le deuxième satellite directement audit dispositif de propulsion principal, l'unité de contrôle étant configurée pour commander une ouverture du deuxième dispositif de fixation pour séparer le deuxième satellite dudit système ;
- les cartouches de propergol solide sont formées par une structure alvéolaire comprenant des alvéoles remplies de propergol solide ;
- la structure alvéolaire est en nid d'abeille ;
- la structure alvéolaire est en métal ou en matériau composite ;
- la structure alvéolaire est en alliage d'aluminium ;
- une surface interne des alvéoles est recouverte par une couche de protection thermique ;
- le dispositif de propulsion secondaire est un dispositif de propulsion à gaz comprimé ;
- les cartouches de propergol solide comprennent chacune un fond rapporté comprenant un perçage chanfreiné ;
- les cartouches de propergol solide comprennent chacune une plage de poussée comprise entre 200 DaN et 240 DaN ;
- le système comprend une batterie qui est reliée à l'unité de contrôle.

Selon un deuxième aspect, l'invention propose un ensemble comprenant un système selon l'une quelconque des caractéristiques précédentes et un premier satellite fixé audit système par le premier dispositif de fixation.

L'ensemble peut également comprendre un deuxième satellite qui est fixé au système par le deuxième dispositif de fixation.

Selon un troisième aspect, l'invention propose un procédé de commande du système selon l'une quelconque des caractéristiques précédentes, dans lequel le procédé comprend les étapes suivantes :
- mesure de la position dudit système par le au moins un capteur de position ;
- contrôle de la mise à feu des cartouches de propergol solide du dispositif de propulsion principal par l'unité de contrôle ;
- contrôle de l'allumage du dispositif de propulsion secondaire par l'unité de contrôle ;
- ouverture du premier dispositif de fixation lorsque le système est dans une position déterminée correspondant à l'orbite de travail du premier satellite.

Le procédé peut également comprendre l'étape suivante :
- ouverture du deuxième dispositif de fixation lorsque le système est dans une position déterminée correspondant à l'orbite de travail du deuxième satellite.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de mise en orbite de travail selon une variante possible dans laquelle un unique satellite est installé sur ledit système ;
- la figure 2 représente une vue du dessous du système représenté sur la figure 1 ;
- la figure 3 représente une vue en coupe d'une alvéole du dispositif de propulsion principal ;
- la figure 4 représente une variante dans laquelle deux satellites sont installés sur le système de mise en orbite de travail, les satellites étant superposés ;
- la figure 5 représente une variante dans laquelle deux satellites sont installés sur le système de mise en orbite de travail, les satellites étant tous les deux directement fixés sur le système.

### Description détaillée de l'invention

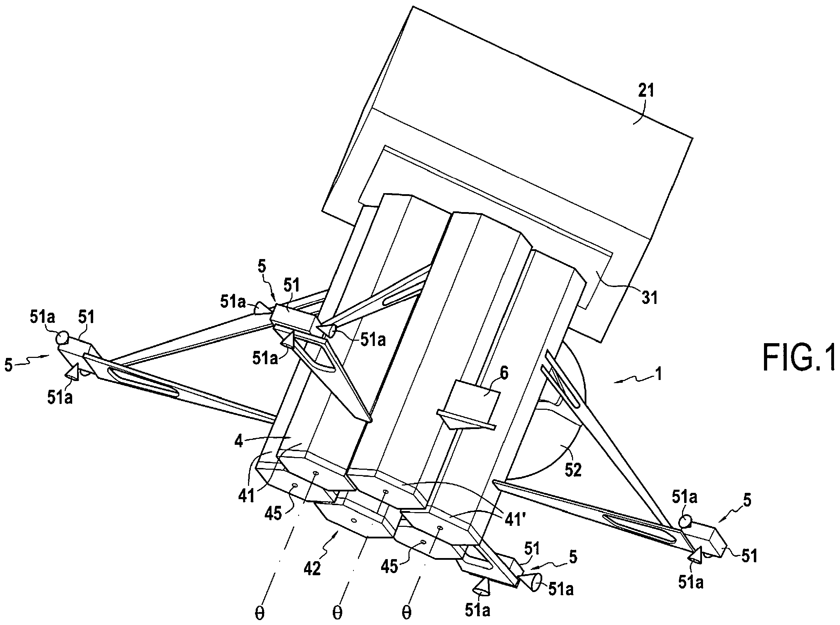

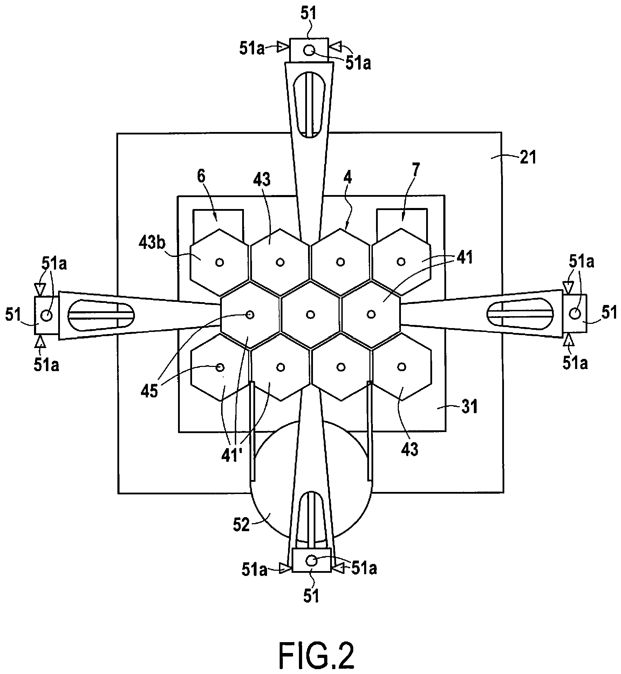

La figure 1 et la figure 2 représente un système 1 de mise en orbite de travail pour au moins un satellite, ledit système 1 étant destiné à transférer au moins un satellite depuis son orbite de transfert jusqu'à son orbite de travail.

Le système 1 comprend un premier dispositif de fixation 31 qui permet la fixation d'un premier satellite 21 au système 1. Le premier dispositif de fixation 31 comprend une position fermée dans laquelle le premier satellite 21 est fixé au système 1, et une position ouverte dans laquelle le premier satellite 21 est détaché dudit système 1.

Le premier dispositif de fixation 31 peut par exemple comprendre des boulonnages explosifs qui sont mis à feu afin de faire passer ledit premier dispositif de fixation 31 dans la position ouverte. Le premier dispositif de fixation 31 peut également par exemple comprendre un ressort qui est comprimé lorsque le premier dispositif de fixation 31 est en position fermé, ledit ressort se déployant lors du passage en position ouverte dudit premier dispositif de fixation 31 afin de donner une impulsion au premier satellite 21 afin de séparer ledit premier satellite 21 et le système 1.

Le système 1 comprend également un dispositif de propulsion principal 4 à propulsion solide. Le dispositif de propulsion principal 4 est formé par une pluralité de cartouches 41 parallèles de propergol solide. Les cartouches 41 peuvent être remplies par exemple en coulant le propergol à l'intérieur des cartouches 41, le propergol étant ainsi collé à l'intérieur desdites cartouches 41, ou bien en glissant un bloc de propergol à l'intérieur des cartouches 41, un jeu existant ainsi entre le bloc de propergol et l'intérieur des cartouches 41. Le propergol peut par exemple être en BUTALANE^{®} ou en BUTALITE^{®}. Le propergol peut par exemple comprendre des plages d'impulsion spécifiques (ISP) dans le vide sont comprise entre 260 et 280 secondes. Par cartouches 41 parallèles on comprend que les cartouches 41 comprennent chacune un axe d'élongation principal θ, les axes d'élongation principaux θ desdites cartouches 41 étant parallèles. Le dispositif de propulsion principal 4 est destiné à fournir la poussée permettant de propulser le système 1 sur lequel le premier satellite 21 est installé depuis l'orbite de transfert sur lequel le lanceur à placé ledit système 1 jusqu'à l'orbite de travail du premier satellite 21.

Le dispositif de propulsion principal 4 comprend un dispositif de mise à feu des cartouches 41 qui est configuré pour permettre une mise à feu indépendante de chacune des cartouches 41. Le dispositif de mise à feu permet ainsi de mettre à feu plusieurs cartouches 41 simultanément, et de mettre à feu plusieurs cartouches 41 les unes à la suite des autres.

Les cartouches 41 du dispositif de propulsion principal 4 sont obturées par un fond rapporté 41' qui est fixé sur lesdites cartouches 41 une fois lesdites cartouches 41 remplies de propergol. Le fond rapporté 41' est de préférence en matériau thermostructural (c'est-à-dire configuré pour résister aux hautes températures provoquées par la combustion du propergol), par exemple en composite carbone/carbone, ou carbone/phénolique.

Le fond rapporté 41' de chacune des cartouches 41 comprend un perçage 45 afin de permettre l'échappement du gaz lors de la mise à feu des cartouches 41. Le perçage 45 peut être formé par un pré-perçage qui est destiné à se rompre lors de la mise à feu de la cartouche 41. De préférence, le perçage 45 est chanfreiné de sorte à posséder une forme conique, le perçage 45 formant ainsi une tuyère pour l'éjection des gaz de combustion du propergol.

Le fait que le dispositif de propulsion principal 4 soit à propulsion solide permet un placement plus rapide en orbite de travail par rapport à une propulsion liquide ou bien électrique, une propulsion à propergol solide ayant une vitesse de libération d'énergie plus rapide qu'une propulsion à ergol liquide ou une propulsion électrique. Par ailleurs, le fait que le dispositif de propulsion principal 4 comprenne une pluralité de cartouches 41 parallèles permet de moduler la propulsion dans le temps. Une telle modulation de la poussée dans le temps est obtenue par un contrôle de la séquence de mise à feu des cartouches 41. La modulation de la poussée apportée par dispositif de propulsion principal 4 permet de garder une même structure de système 1 pour des lancements de satellites différents.

Les cartouches 41 peuvent comprendre une plage de poussée unitaire (à +20°C) comprise entre 200 DaN et 240 DaN. Une telle plage de poussée pour chaque cartouche 41 permet d'assurer un transfert d'orbite rapide. Pour ce faire, la charge de propergol de chaque cartouche 41 est adaptée pour que la combustion de ladite charge de propergol génère une poussée comprise entre 200 DaN et 240 DaN.

Les cartouches 41 sont structurelles, c'est-à-dire que les cartouches 41 reprennent les charges mécaniques créées par la poussée générée par le système 1.

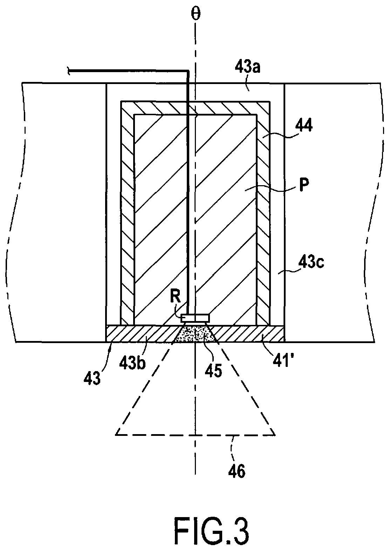

Le dispositif de propulsion principal 4 peut être formé par un réseau alvéolaire 42, chaque alvéole 43 dudit réseau alvéolaire 42 étant remplie de propergol solide de sorte à former une cartouche 41. Comme représenté sur la figure 3, les alvéoles 43 comprennent une première paroi de fond 43a et une deuxième paroi de fond 43b situées de part et d'autre d'une cavité interne formée par une paroi latérale 43c, ladite cavité interne étant obturée par la première et la deuxième parois de fond 43a et 43b. Le fond rapporté 41' forme la deuxième paroi de fond 43b.

Contrairement aux solutions de moteur d'apogée à propulsion solide connues qui comprennent une unique cartouche de propergol solide qui comprend au moins un canal possédant une forme complexe qui a été usinée spécialement en fonction du transfert d'orbite à réaliser, les cartouches 41 du système de propulsion principal 4 selon l'invention comprennent une structure simple, elles comprennent un unique bloc de propergol P dépourvu de canal interne. La combustion du bloc de propergol se réalise avec un front de combustion qui avance progressivement depuis le fond rapporté 41' vers l'autre extrémité de la cartouche 41, comme la combustion d'une cigarette. La section droite du bloc de propergol P peut comprendre par exemple une forme circulaire, hexagonale, ou bien encore carrée.

La structure alvéolaire 42 est de préférence en nid d'abeille afin d'assurer une bonne compacité du dispositif de propulsion principal 4. Toutefois, d'autres formes autres que des alvéoles 43 à section droite hexagonale peuvent être possibles, comme par exemple des alvéoles 43 à section droite circulaire ou bien à section droite carrée.

Par section droite on comprend une section perpendiculaire à l'axe principal d'élongation θ de ladite alvéole 43.

Les alvéoles 43 peuvent être en métal, par exemple en alliage d'aluminium, et notamment un alliage formé à partir des familles d'alliage d'aluminium 2024 et 7010, afin de limiter la masse du réseau alvéolaire 42. Les alvéoles 43 peuvent également être en matériau composite, par exemple un composite en fibre de carbone et à matrice époxy. L'intérieur des alvéoles 43 est de préférence recouvert par une couche de protection thermique 44, qui peut être un élastomère, par exemple une silicone ou en EPDM (éthylène-propylène-diène monomère). Lorsque la structure alvéolaire 42 est en métal, elle peut être réalisée par impression tridimensionnelle (également appelé fabrication additive). Lorsque la structure alvéolaire 42 est en matériau composite, les alvéoles 43 peuvent être formées par enroulement du renfort fibreux autour d'un mandrin, le renfort fibreux pouvant être pré-imprégné ou bien imprégné après la mise en forme autour du mandrin.

La structure alvéolaire 42 peut par exemple comprendre entre 5 et 20 alvéoles 43, plus précisément entre 7 et 16 alvéoles 43, le nombre d'alvéoles 43 pouvant être adapté suivant la masse du ou des satellites à transporter. Par ailleurs, la structure alvéolaire 42 peut être adaptée à la masse de la charge à transporter en jouant sur le nombre d'alvéoles 43 remplies de propergol.

Les alvéoles 43 peuvent avoir une hauteur comprise entre 1500 mm et 2000 mm, notamment 1700 mm, et une section avec une surface comprise entre 0,038 m² et 0,087 m². De telles alvéoles permettent d'apporter une vitesse et une accélération au système 1 adaptée pour réaliser le transfert d'orbite sans endommager ledit premier satellite 21 tout en assurant une vitesse de déplacement satisfaisante.

Comme illustré sur la figure 3, le dispositif de mise à feu peut par exemple comprendre par une résistance chauffante R qui est en contact avec la couche de propergol P de la cartouche 41, par exemple en étant enfoui au sein de la couche propergol P à proximité du fond rapporté 41'.

Le premier dispositif de fixation 31 peut être directement situé sur la première paroi de fond 43a des alvéoles 43, permettant ainsi de réduire l'encombrement du système 1.

Par ailleurs, le dispositif de propulsion principal 4 peut comprendre une tuyère aux extrémités des cartouches 41, permettant ainsi d'adapter le coefficient d'expansion du gaz expulsé par lesdites cartouches 41.

Comme illustré sur la figure 3, la tuyère peut par exemple être formée par le perçage 45 chanfreiné du fond rapporté 41'. Le perçage 45 peut être rempli d'un matériau sacrificiel qui est destiné à être détruit et ainsi ouvrir le perçage 45 lors de la mise à feu de la cartouche 41. Le matériau sacrificiel peut par exemple être réalisé par un pré-perçage. Lorsque la tuyère est formée uniquement par le perçage 45, le coefficient d'expansion peut être compris entre 2 et 3, et est de préférence est égal à 2,5. De plus, comme cela est illustré sur la figure 3 par les traits discontinus, une tuyère rapportée 46 peut être fixée à l'extrémité de la cartouche 41, dans la continuité du perçage 45, permettant ainsi d'obtenir un coefficient d'expansion plus important, par exemple compris entre 2,5 et 100.

Le système 1 comprend également un dispositif de propulsion secondaire 5 qui est ré-allumable et qui est destiné d'une part à permettre le pilotage de l'orientation du système 1 afin de placer le premier satellite 21 dans son orbite de travail de manière contrôlée, et d'autre part à placer le système 1 dans une orbite de garage une fois le premier satellite 21 placé dans son orbite de travail. Par ré-allumable on comprend ici que la poussée apportée par le dispositif de propulsion secondaire 5 peut être activée et désactivée à volonté. Le dispositif de propulsion secondaire 5 est fixé sur les cartouches 41 du dispositif de propulsion principal 4.

Le dispositif de propulsion secondaire 5 est configuré pour transmettre une deuxième poussée qui est inférieure à la première poussée transmise par le dispositif de propulsion principal 4. Le dispositif de propulsion secondaire 5 peut également être configuré pour donner une vitesse inférieure à la vitesse donnée par le dispositif de propulsion principal 4, par exemple une vitesse comprise entre 5 m/s et 20 m/s, plus précisément entre 10 m/s et 15 m/s, et encore plus précisément entre 10 m/s et 12 m/s. Une telle vitesse permet d'assurer une mise en orbite précise du premier satellite 21.

Le dispositif de propulsion secondaire 5 peut par exemple comprendre une pluralité de vannes d'éjection 51 réparties de manière régulière autour du système 1, qui sont reliées à un réservoir 52, et qui sont configurées pour éjecter un fluide stocké dans ledit réservoir 52. De préférence, les vannes d'éjection 51 comprennent une pluralité de points d'éjection 51a qui sont orientées dans des directions différentes, afin de permettre une éjection du fluide dans plusieurs directions possibles par une vanne d'éjection 51. Le réservoir 52 peut par exemple comprendre un gaz ou un liquide stocké sous pression. Selon une autre variante possible, le dispositif de propulsion secondaire 5 peut être un dispositif de propulsion électrique.

Le système 1 comprend également au moins un capteur de position 6 qui est configuré pour mesurer la position du système 1. La position du système 1 comprend d'une part l'orientation du système 1 et d'autre part la localisation dudit système 1 dans l'espace. Le au moins un capteur de position 6 peut comprendre des capteurs optiques, comme par exemple un capteur stellaire, un capteur terre, ou bien un capteur solaire. Le au moins un capteur de position 6 peut également comprendre une centrale inertielle.

Le système 1 comprend en outre une unité de contrôle 7 qui est reliée audit au moins un capteur de position 6 et qui est configurée pour commander le premier dispositif de fixation 31, le dispositif de propulsion principal 4 et le dispositif de propulsion secondaire 5 en fonction de la position mesurée par ledit au moins un capteur de position 6.

L'unité de contrôle 7 est configurée pour commander la séquence de mise à feu des cartouches 41 du dispositif de propulsion principal 4 de sorte que ledit dispositif de propulsion principal 4 fournisse une poussée adaptée pour déplacer le système 1 depuis l'orbite de transfert jusqu'à l'orbite de travail du premier satellite 21. Pour ce faire, l'unit de contrôle 7 est reliée au dispositif de mise à feu des cartouches 41 dudit dispositif de propulsion principal 4. De préférence, la séquence de mise à feu des cartouches 41 est contrôlée par l'unité de contrôle afin de garder l'accélération du système 1 comprise entre 0,2 et 5g, et de manière encore plus préférentielle entre 0,2g et 1g, afin d'assurer un transfert d'orbite d'une durée satisfaisante sans endommager le premier satellite 21. La vitesse visée par l'unité de contrôle 7 peut être comprise entre 1400 m/s et 2000 m/s.

L'unité de contrôle 7 est également configurée pour commander le dispositif de propulsion secondaire 5 afin de donner audit système 1 l'orientation souhaitée. Le contrôle de l'orientation du système 1 est notamment réalisé lorsque le système 1 est arrivé sur l'orbite de travail du premier satellite 21 afin de donner audit système 1 l'orientation désirée afin de réaliser la séparation du système 1 avec le premier satellite 21 afin de placer ledit premier satellite 21 dans son orbite de travail. L'unité de contrôle 7 est configurée pour commander le dispositif de propulsion secondaire 5 afin de déplacer le système 1 dans une orbite de garage une fois que le premier satellite 21 est séparé dudit système 1.

L'unité de contrôle 7 peut également être configurée pour donner au système 1 sur lequel est fixé le premier satellite 21 une deuxième vitesse inférieure à la première vitesse par contrôle de l'allumage du dispositif de propulsion secondaire 5. L'unité de contrôle 7 peut notamment être configurée pour donner une deuxième vitesse comprise entre 5 m/s et 20 m/s, plus précisément 10 m/s et 15 m/s, et encore plus précisément entre 10 m/s et 12 m/s. La deuxième vitesse permet d'assurer un bon positionnement du premier satellite 21 dans son orbite de travail.

L'unité de contrôle 7 est en outre configurée pour commander le premier dispositif de fixation 31 afin d'une part de maintenir ledit premier dispositif de fixation 31 dans sa position fermée de sorte à maintenir la fixation entre le premier satellite 21 et le système 1 durant toute la phase de lancement ainsi que durant le transfert entre l'orbite de transfert et l'orbite de travail dudit premier satellite 21, et d'autre part afin de basculer ledit premier dispositif de fixation 31 dans sa position ouverte pour séparer le premier satellite 21 et le système 1 lorsque ledit système 1 est situé sur l'orbite de travail du premier satellite 21 et que ledit système 1 est orientée de la manière souhaitée.

L'unité de contrôle 7 comprend une mémoire, sur laquelle est enregistré un produit programme d'ordinateur, ou programme d'ordinateur, configuré pour mettre en œuvre un procédé de commande du système 1 de mise en orbite de travail d'au moins un satellite tel que décrit dans la présente demande. L'unité de contrôle 7 comprend également un processeur pour la mise en oeuvre dudit programme d'ordinateur, ou produit programme d'ordinateur, enregistré sur la mémoire.

Le système 1 est indépendant énergétiquement du premier satellite 21 afin de ne pas dépenser l'énergie stockée par le premier satellite 21 et réduire la durée d'utilisation dudit premier satellite 21. Pour ce faire, le système 1 comprend une batterie embarquée qui est reliée à l'unité de contrôle 7 et qui alimente l'unité de contrôle 7 en électricité.

Un procédé de commande du système 1 pour le transfert du premier satellite 21 depuis son orbite de transfert à son orbite de travail comprend les étapes suivantes :
- mesure de la position dudit système 1 par le au moins un capteur de position 6, la mesure étant transmise à l'unité de contrôle 7 ;
- contrôle de la mise à feu des cartouches 41 de propergol solide du dispositif de propulsion principal 4 par l'unité de contrôle 7, permettant ainsi de fournir la poussée pour le déplacement entre l'orbite de transfert et l'orbite de travail du premier satellite 21 ;
- contrôle de l'allumage du dispositif de propulsion secondaire par l'unité de contrôle, permettant ainsi de contrôler précisément la position du système 1 ;
- ouverture du premier dispositif de fixation 31 lorsque le système 1 est dans une position déterminée correspondant à l'orbite de travail du premier satellite 31.

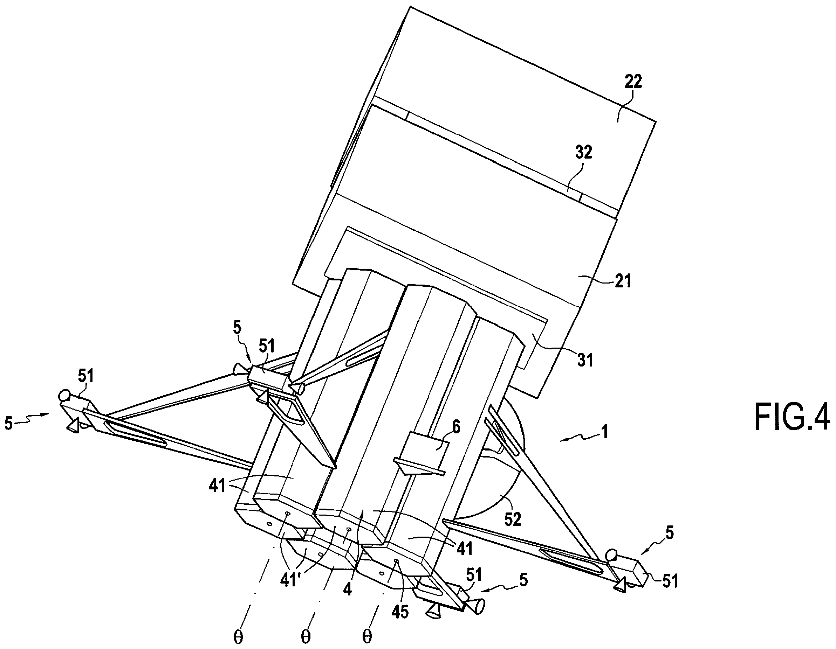

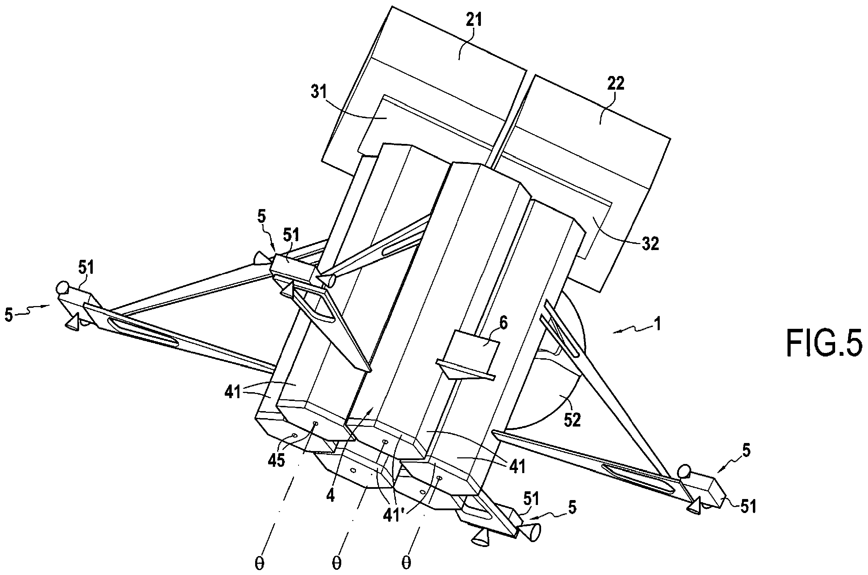

Comme illustré sur les figures 4 et 5, le système 1 est destiné à mettre en orbite de travail plusieurs satellites. Le fait que le système 1 place en orbite plusieurs satellites offre l'avantage de mutualiser l'équipement pour la propulsion desdits satellites. Ainsi, comme illustré sur la figure 4 et la figure 5, en plus du premier satellite 21, un deuxième satellite 22 est fixé au système 1. Bien entendu, un nombre plus important de satellites peut être installé sur le système 1. La fixation du deuxième satellite 22 au système 1 est réalisée par un deuxième dispositif de fixation 32 qui est similaire au premier dispositif de fixation 31. Ainsi, le deuxième dispositif de fixation 32 possède une position fermée dans laquelle ledit deuxième dispositif de fixation 32 maintient le deuxième satellite 22, et une positon ouverte dans laquelle ledit deuxième satellite 22 n'est plus fixé audit système 1. L'unité de contrôle 7 est reliée au deuxième dispositif de fixation 32 et est configurée pour commander l'ouverture dudit deuxième dispositif de fixation 32, ainsi que tous les autres dispositifs de fixation lorsque plus de deux satellites sont installés sur le système 1.

Le dispositif de fixation du ou des satellites 21 et 22 sur le système 1 peut comprendre un plateau, le premier satellite 21 et/ou le deuxième satellite 22 étant rapportés sur une première face dudit plateau, le dispositif de propulsion principal 4 étant fixé sur la deuxième face du plateau qui est opposée à la première face. Le plateau peut par exemple comprendre des brides de fixation sur laquelle le premier satellite 21 et le deuxième satellite 22 sont fixés par des boulonnages explosifs. Le fait que le dispositif de fixation comprenne un plateau permet de facilement fixer plusieurs satellites sur le système 1, et offre la possibilité de fixer les satellites les uns à côtés des autres.

En outre, selon une variante possible, le plateau peut comprendre un mât faisant saillie de la première face dudit plateau, une pluralité de satellites étant fixés sur ledit mât. Le mât est particulièrement avantageux pour la mise à poste d'une grappe de microsatellites ou de nanosatellites.

Le nombre de cartouches 41 du dispositif de propulsion principal 4 peut être adapté suivant la masse des satellites à transporter, et donc notamment suivant le nombre de satellites. Par ailleurs, le remplissage des cartouches 41 de propergol solide peut également être adapté suivant la masse des satellites à transporter.

Dans la variante illustrée sur la figure 4, le deuxième satellite 22 est superposé au premier satellite 21. Ainsi, le premier dispositif de fixation 31 est directement au contact d'une part du système 1 et d'autre part du premier satellite 21 afin de fixer ledit premier satellite 21 audit système 1, et le deuxième dispositif de fixation 32 est directement au contact d'une part du premier satellite 21 et d'autre part du deuxième satellite 22 afin de fixer ledit deuxième satellite 22 audit premier satellite 21. Cette variante offre l'avantage de réduire l'encombrement en largeur du système 1 et des satellites dans le lanceur.

Dans la variante illustrée sur la figure 4, le deuxième satellite 22 est d'abord placé dans son orbite de travail par le système 1, puis le premier satellite 21 est placé dans son orbite de travail. Une telle variante peut par exemple être utilisée lorsque le deuxième satellite 22 possède une orbite de travail de plus faible altitude que le premier satellite 21, ou bien lorsque les deux satellites 21 et 22 ont deux orbites de travail de même altitude.

L'unité de commande 7 contrôle le dispositif de propulsion principal 4 afin de fournir une poussée pour réaliser le transfert entre l'orbite de transfert auquel le lanceur a placé le système 1 sur lequel sont installés les premier et deuxième satellites 21 et 22 et l'orbite de travail du deuxième satellite 22. Lorsque l'unité de commande 7 détecte avec le ou les capteurs de position 6 que le système 1 est arrivé au niveau de l'orbite de travail du deuxième satellite 22, l'unité de commande 7 contrôle la vitesse et l'orientation dudit système 1 avec le dispositif de propulsion secondaire 5 afin de se mettre en condition pour placer le deuxième satellite 22 dans son orbite de travail. Lorsque l'unité de contrôle 7 détecte que la position du système 1 est satisfaisante, l'unité de contrôle 7 commande l'ouverte du deuxième dispositif de fixation 32 et ainsi sépare ledit deuxième satellite 22 dudit système 1 (et du premier satellite 21). Ensuite, si l'altitude de l'orbite de travail du premier satellite 21 est supérieure à l'altitude de l'orbite de travail du deuxième satellite 22, l'unité de contrôle 7 commande le dispositif propulsion principal 4 pour fournir la poussée permettant de réaliser le transfert entre l'orbite de travail du deuxième satellite 22 et l'orbite de travail du premier satellite 21. Si l'orbite de travail du premier satellite 21 est à la même altitude de l'orbite de travail du deuxième satellite 22, l'unité de contrôle 7 commande l'allumage du dispositif de propulsion secondaire 5 afin d'adapter la position du système 1. Une fois le système 1 au niveau de l'orbite de travail du premier satellite 21 et dans la position désirée, l'unité de contrôle 7 commande l'ouverture du premier dispositif de fixation 31 et ainsi sépare le premier satellite 21 du système 1. Une fois le système 1 séparé du premier satellite 21, l'unité de contrôle 7 commande le dispositif de propulsion secondaire 5 afin de placer le système 1 dans une orbite de garage.

Dans la variante illustrée sur la figure 5, le premier satellite 21 et le deuxième satellite 22 sont situés côte à côte, les satellites 21 et 22 étant tous les deux directement fixés sur le système 1. Dans cette variante, le premier dispositif de fixation 31 est directement situé entre le premier satellite 21 et le système 1, et le deuxième dispositif de fixation 32 est directement situé entre le deuxième satellite 21 et le système 1.

La variante illustrée sur la figure 5 offre l'avantage de ne pas imposer qu'un satellite soit mis dans son orbite de travail avant l'autre. De plus, cette variante permet de limiter l'encombrement en hauteur du système 1 et des satellites dans le lanceur. Le premier satellite 21 et le deuxième satellite 22 peuvent avoir des orbites de travail à des altitudes différentes ou bien ils peuvent avoir des orbites de travail de même altitude.

## Revendications

1. Système (1) de mise en orbite de travail pour au moins un satellite, le système (1) de mise en orbite de travail comprenant:
- un premier dispositif de fixation (31) configuré pour fixer un premier satellite (21) au système (1) de mise en orbite de travail ;
- un dispositif de propulsion principal (4) à propulsion solide comprenant une pluralité de cartouches (41) parallèles de propergol solide ;
- un dispositif de propulsion secondaire (5) qui est ré-allumable ;
- au moins un capteur de position (6) configuré pour mesurer la position dudit système (1) ;
- une unité de contrôle (7) reliée audit au moins un capteur de position (6) et qui est configurée pour commander une mise à feu des cartouches (41) du dispositif de propulsion principal (4) pour déplacer ledit système (1) depuis une orbite de transfert jusqu'à une orbite de travail du premier satellite (21), ladite unité de contrôle (7) étant en outre configurée pour commander une ouverture du premier dispositif de fixation (31) pour séparer ledit système (1) du premier satellite (21), et ladite unité de contrôle (7) étant configurée pour commander un allumage du dispositif de propulsion secondaire (5) pour contrôler une orientation dudit système (1).

2. Système selon la revendication 1 dans lequel les cartouches (41) de propergol solide comprennent chacune une plage de poussée comprise entre 200 DaN et 240 DaN.

3. Système selon la revendication 1 ou 2, dans lequel l'unité de contrôle (7) est configurée pour commander un allumage séquentiel de la pluralité de cartouches (41) du dispositif de propulsion principal (4).

4. Système (1) selon l'une quelconque des revendications 1 à 3, dans lequel le système (1) comprend un deuxième dispositif de fixation (32) configuré pour fixer un deuxième satellite (22) audit système (1), l'unité de contrôle (7) étant configurée pour commander une ouverture du deuxième dispositif de fixation (32) pour séparer le deuxième satellite (22) dudit système (1).

5. Système (1) selon la revendication 4, dans lequel le deuxième dispositif de fixation (32) est configuré pour fixer le deuxième satellite (22) directement au premier satellite (21), l'unité de contrôle (7) étant configurée pour commander une ouverture du deuxième dispositif de fixation (32) pour séparer le deuxième satellite (22) dudit premier satellite (21).

6. Système (1) selon la revendication 4, dans lequel le deuxième dispositif de fixation (32) est configuré pour fixer le deuxième satellite (22) directement audit dispositif de propulsion principal (4), l'unité de contrôle (7) étant configurée pour commander une ouverture du deuxième dispositif de fixation (32) pour séparer le deuxième satellite (22) dudit système (1).

7. Système (1) selon l'une quelconque des revendications 1 à 6, dans lequel les cartouches (41) de propergol solide sont formées par une structure alvéolaire (42) comprenant des alvéoles (43) remplies de propergol solide.

8. Système (1) selon la revendication 7, dans lequel la structure alvéolaire (42) est en nid d'abeille.

9. Système (1) selon l'une des revendications 7 ou 8, dans lequel la structure alvéolaire (42) est en métal ou en matériau composite.

10. Système selon la revendication 9, dans lequel une surface interne des alvéoles (43) est recouverte par une couche de protection thermique (44).

11. Système (1) selon l'une quelconque des revendications 1 à 10, dans lequel le dispositif de propulsion secondaire (5) est un dispositif de propulsion à gaz comprimé.

12. Système (1) selon l'une quelconque des revendications 1 à 11, dans lequel les cartouches de propergol solide comprennent chacune un fond rapporté comprenant un perçage chanfreiné.

13. Ensemble comprenant un système (1) selon l'une quelconque des revendications 1 à 12, et un premier satellite (21) fixé audit système (1) par le premier dispositif de fixation (31).

14. Ensemble selon la revendication 13, dans lequel l'ensemble comprend un deuxième satellite (22) qui est fixé au système (1) par le deuxième dispositif de fixation (32).

15. Procédé de commande du système (1) selon l'une quelconque des revendications 1 à 12, dans lequel le procédé comprend les étapes suivantes :
- mesure de la position dudit système (1) par le au moins un capteur de position (6) ;
- contrôle de la mise à feu des cartouches (41) de propergol solide du dispositif de propulsion principal (4) par l'unité de contrôle (7) ;
- contrôle de l'allumage du dispositif de propulsion secondaire (5) par l'unité de contrôle (7) ;
- ouverture du premier dispositif de fixation (31) lorsque le système (1) est dans une position déterminée correspondant à l'orbite de travail du premier satellite (31).

16. Procédé selon la revendication 15, dans lequel ledit procédé comprend l'étape suivante :
- ouverture du deuxième dispositif de fixation (32) lorsque le système (1) est dans une position déterminée correspondant à l'orbite de travail du deuxième satellite (22).

## Patentansprüche

1. System (1) zum Einbringen in eine Arbeitsumlaufbahn für mindestens einen Satelliten, wobei das System (1) zum Einbringen in eine Arbeitsumlaufbahn umfasst:
- eine erste Befestigungsvorrichtung (31), die ausgelegt ist, um einen ersten Satelliten (21) am System (1) zum Einbringen in eine Arbeitsumlaufbahn zu befestigen;
- eine Hauptantriebsvorrichtung (4) mit Feststoff-Antrieb, umfassend eine Vielzahl paralleler Feststoff-Propergol-Patronen (41);
- eine sekundäre Antriebsvorrichtung (5), die wiederentzündlich ist;
- mindestens ein Positionssensor (6), der ausgelegt ist, um die Position des Systems (1) zu messen;
- eine Kontrolleinheit (7), die mit dem mindestens einen Positionssensor (6) verbunden ist und die ausgelegt ist, um eine Anzündung der Patronen (41) der Hauptantriebsvorrichtung (4) zu steuern, um das System (1) aus einer Transferumlaufbahn in eine Arbeitsumlaufbahn des ersten Satelliten (21) zu verlagern, wobei die Kontrolleinheit (7) ferner ausgelegt ist, um eine Öffnung der ersten Befestigungsvorrichtung (31) zu steuern, um das System (1) vom ersten Satelliten (21) zu trennen, und die Kontrolleinheit (7) ausgelegt ist, um eine Zündung der sekundären Antriebsvorrichtung (5) zu steuern, um eine Ausrichtung des Systems (1) zu kontrollieren.

2. System nach Anspruch 1, wobei die Feststoff-Propergol-Patronen (41) jeweils einen Schubbereich umfassen, der zwischen 200 DaN und 240 DaN liegt.

3. System nach Anspruch 1 oder 2, wobei die Kontrolleinheit (7) ausgelegt ist, um eine sequentielle Zündung der Vielzahl der Patronen (41) der Hauptantriebsvorrichtung (4) zu steuern.

4. System (1) nach einem der Ansprüche 1 bis 3, wobei das System (1) eine zweite Befestigungsvorrichtung (32) umfasst, die ausgelegt ist, um einen zweiten Satelliten (22) am System (1) zu befestigen, wobei die Kontrolleinheit (7) ausgelegt ist, um eine Öffnung der zweiten Befestigungsvorrichtung (32) zu steuern, um den zweiten Satelliten (22) vom System (1) zu trennen.

5. System (1) nach Anspruch 4, wobei die zweite Befestigungsvorrichtung (32) ausgelegt ist, um den zweiten Satelliten (22) direkt am ersten Satelliten (21) zu befestigen, wobei die Kontrolleinheit (7) ausgelegt ist, um eine Öffnung der zweiten Befestigungsvorrichtung (32) zu steuern, um den zweiten Satelliten (22) vom ersten Satelliten (21) zu trennen.

6. System (1) nach Anspruch 4, wobei die zweite Befestigungsvorrichtung (32) ausgelegt ist, um den zweiten Satelliten (22) direkt an der Hauptantriebsvorrichtung (4) zu befestigen, wobei die Kontrolleinheit (7) ausgelegt ist, um eine Öffnung der zweiten Befestigungsvorrichtung (32) zu steuern, um den zweiten Satelliten (22) vom System (1) zu trennen.

7. System (1) nach einem der Ansprüche 1 bis 6, wobei die Feststoff-Propergol-Patronen (41) von einer Wabenstruktur (42) gebildet sind, die mit Feststoff-Propergol gefüllte Waben (43) umfassen.

8. System (1) nach Anspruch 7, wobei die Wabenstruktur (42) bienenwabenförmig ist.

9. System (1) nach einem der Ansprüche 7 oder 8, wobei die Wabenstruktur (42) aus Metall oder aus Kompositmaterial ist.

10. System nach Anspruch 9, wobei eine innere Oberfläche der Waben (43) mit einer Wärmeschutzschicht (44) bedeckt ist.

11. System (1) nach einem der Ansprüche 1 bis 10, wobei die sekundäre Antriebsvorrichtung (5) eine Druckgas-Antriebsvorrichtung ist.

12. System (1) nach einem der Ansprüche 1 bis 11, wobei die Feststoff-Propergol-Patronen jeweils einen angesetzten Boden umfassen, der eine abgeschrägte Bohrung umfasst.

13. Anordnung, umfassend ein System (1) nach einem der Ansprüche 1 bis 12 und einen ersten Satelliten (21), der am System (1) durch die erste Befestigungsvorrichtung (31) befestigt ist.

14. Anordnung nach Anspruch 13, wobei die Anordnung einen zweiten Satelliten (22) umfasst, der am System (1) durch die zweite Befestigungsvorrichtung (32) befestigt ist.

15. Verfahren zur Steuerung des Systems (1) nach einem der Ansprüche 1 bis 12, wobei das Verfahren die folgenden Schritte umfasst:
- Messen der Position des Systems (1) durch den mindestens einen Positionssensor (6);
- Kontrollieren der Anzündung der Feststoff-Propergol-Patronen (41) der Hauptantriebsvorrichtung (4) durch die Kontrolleinheit (7);
- Kontrollieren der Zündung der sekundären Antriebsvorrichtung (5) durch die Kontrolleinheit (7);
- Öffnen der ersten Befestigungsvorrichtung (31), wenn das System (1) in einer bestimmten Position ist, die der Arbeitsumlaufbahn des ersten Satelliten (31) entspricht.

16. Verfahren nach Anspruch 15, wobei das Verfahren den folgenden Schritt umfasst:
- Öffnen der zweiten Befestigungsvorrichtung (32), wenn das System (1) in einer bestimmten Position ist, die der Arbeitsumlaufbahn des zweiten Satelliten (22) entspricht.

## Claims

1. A system (1) for positioning at least one satellite in working orbit, the system (1) for positioning satellites in working orbit comprising:
- a first attachment device (31) configured to attach a first satellite (21) to the system (1) for positioning satellites in working orbit;
- a main propulsion device (4) with solid propulsion comprising a plurality of parallel solid-propellant cartridges (41);
- a secondary propulsion device (5) which is re-ignitable;
- at least one position sensor (6) configured to measure the position of said system (1);
- a monitoring unit (7) connected to said at least one position sensor (6) and which is configured to control a firing of the cartridges (41) of the main propulsion device (4) to move said system (1) from a transfer orbit to a working orbit of the first satellite (21), said monitoring unit (7) being further configured to control an opening of the first attachment device (31) to separate said system (1) from the first satellite (21), and said monitoring unit (7) being configured to control an ignition of the secondary propulsion device (5) to monitor an orientation of said system (1).

2. The system according to claim 1 wherein the solid-propellant cartridges (41) each comprise a thrust range comprised between 200 DaN and 240 DaN.

3. The system according to claim 1 or 2, wherein the monitoring unit (7) is configured to control a sequential ignition of the plurality of cartridges (41) of the main propulsion device (4).

4. The system (1) according to any one of claims 1 to 3, wherein the system (1) comprises a second attachment device (32) configured to attach a second satellite (22) to said system (1), the monitoring unit (7) being configured to control an opening of the second attachment device (32) to separate the second satellite (22) from said system (1).

5. The system (1) according to claim 4, wherein the second attachment device (32) is configured to attach the second satellite (22) directly to the first satellite (21), the monitoring unit (7) being configured to control an opening of the second attachment device (32) to separate the second satellite (22) from said first satellite (21).

6. The system (1) according to claim 4, wherein the second attachment device (32) is configured to attach the second satellite (22) directly to said main propulsion device (4), the monitoring unit (7) being configured to control an opening of the second attachment device (32) to separate the second satellite (22) from said system (1).

7. The system (1) according to any one of claims 1 to 6, wherein the solid-propellant cartridges (41) are formed by a cellular structure (42) comprising cells (43) filled with solid-propellant.

8. The system (1) according to claim 7, wherein the cellular structure (42) is a honeycomb structure.

9. The system (1) according to any of claims 7 or 8, wherein the cellular structure (42) is made of metal or of composite material.

10. The system according to claim 9, wherein an inner surface of the cells (43) is covered by a thermal protection layer (44).

11. The system (1) according to any one of claims 1 to 10, wherein the secondary propulsion device (5) is a compressed-gas propulsion device.

12. The system (1) according to any one of claims 1 to 11, wherein the solid-propellant cartridges each comprise an added bottom comprising a chamfered drilling.

13. An assembly comprising a system (1) according to any one of claims 1 to 12, and a first satellite (21) attached to said system (1) by the first attachment device (31).

14. The assembly according to claim 13, wherein the assembly comprises a second satellite (22) which is attached to the system (1) by the second attachment device (32).

15. The method for controlling the system (1) according to any one of claims 1 to 12, wherein the method comprises the following steps:
- measuring the position of said system (1) by the at least one position sensor (6);
- monitoring the firing of the solid-propellant cartridges (41) of the main propulsion device (4) by the monitoring unit (7);
- monitoring the ignition of the secondary propulsion device (5) by the monitoring unit (7);
- opening the first attachment device (31) when the system (1) is in a determined position corresponding to the working orbit of the first satellite (31).

16. The method according to claim 15, wherein said method comprises the following step:
- opening the second attachment device (32) when the system (1) is in a determined position corresponding to the working orbit of the second satellite (22).
